# EUROPÄISCHE PATENTANMELDUNG

(11) **EP 4 759 665 A1**
(43) Veröffentlichungstag der Anmeldung: **17.06.2026**
(21) Anmeldenummer: 25214280.7
(22) Anmeldetag: 07.11.2025
(51) Int. Cl.: B61D 23/02, B60R 3/02

(54) **REINIGUNGSVORRICHTUNG FÜR ZUSTIEGSSYSTEME, INSBESONDERE FÜR SCHIEBETRITTE AN FAHRZEUGEN**

(30) Priorität: 13.12.2024 DE 202024107262 U
(71) Anmelder: Bode - Die Tür GmbH, 34123 Kassel (DE)
(72) Erfinder: CIMMINO, Marco, 37139 Adelebsen (DE); AREND, Ulrich, 34576 Dickershausen (DE); REITZ, Martin, 34369 Hofgeismar (DE)
(74) Vertreter: Patentanwälte Bauer Vorberg Kayser

(57) **Zusammenfassung**

Die Erfindung bezieht sich auf eine Reinigungsvorrichtung für ein Trittsystem. Sie weist einen ein- und ausfahrbaren Schiebetritt (25) und ein Reinigungselement für eine Trittfläche auf, welches derart angeordnet und ausgeführt ist, dass dieses bei Bewegung des Schiebetritts (24) auf der Trittfläche befindliche Fremdkörper (44) entfernt.

## Beschreibung

Die Erfindung betrifft eine Reinigungsvorrichtung für Zustiegssysteme, insbesondere für ein Trittsystem mit einem ein- und ausfahrbaren Schiebetritt an Schienenfahrzeugen oder ähnlichen Transportmitteln.

Im Rahmen von Projektanforderungen entstehen immer schärfere Anforderungen hinsichtlich Verfügbarkeit von Trittsystemen in verschiedenen Betriebsszenarien und Umwelteinflüssen.

Üblich ist, dass in Bereich der Bahninfrastruktur bei schweren Winterbedingungen und tiefen Temperaturen Streusalz oder Ähnliches genutzt wird, um Passagiere vor leichten oder schweren Verletzungen wie Stürzen zu bewahren. Je nach Bestimmungs- und Verwendungsort werden dazu verschiedene Fremdkörper (Salz, Splitt, Feinstein, usw.) genutzt.

Je nach Korngröße und Ausprägung (aktuell bis zu 20 mm) können diese Fremdkörper auf die ausgefahrene Trittstufe bzw. den Schiebetritt gelangen und zu Störungen, wie mehrmaligen Einfahrversuchen oder gar Klemmen von Trittsystemen führen. Fremdkörper =/> 5 mm können sich durch die Bewegung (insbesondere die Einfahrbewegung) des Schiebetritts temporär oder dauerhaft verklemmen.

Zwischen Trittleisten-Unterseite und Schiebetrittoberfläche ist ein Spalt systemimmanent. Dieser Spalt (überwiegend etwa 3 bis 10 mm, meist etwa 5 mm) wird üblicherweise durch eine Bürste ergänzt, um das Eindringen von Schmutz und Fremdkörpern in den Innenraum der Trittkassette bzw. des Fahrzeuges zu verringern. Oftmals reinigen solche Bürsten bei grobkörnigen Fremdkörpern aber nur unzureichend.

Die Aufgabe der Erfindung besteht darin, ein Schiebetrittsystem vor dem Einklemmen und Verschmutzen durch Fremdkörper zu schützen. Es soll eine Reinigungsvorrichtung bereitgestellt werden, welche ein Schiebetrittsystem wirksam vor dem Einklemmen und der Beeinträchtigung durch Fremdkörper schützt und so die Systemverfügbarkeit insbesondere bei Einsatz von Streumitteln deutlich erhöht. Die Funktionsfähigkeit und Verfügbarkeit des Schiebetrittsystems soll auch unter widrigen Umweltbedingungen sichergestellt sein.

Erfindungsgemäß wird die Aufgabe durch eine Vorrichtung mit den Merkmalen des Anspruchs 1 gelöst.

Die erfindungsgemäße Vorrichtung, hält sich dem Spalt nähernde Fremdkörper wirksam fern und reinigt zuverlässig den Schiebetritt oder die Trittstufe, was die Verfügbarkeit des Systems in kritischen Betriebszuständen wesentlich erhöht.

Die Erfindung bezieht sich auf die Reinigung von Schiebetritten und Trittstufen gleichermaßen, weswegen die Begriffe im Zusammenhang mit der Erfindung synonym verwendet werden.

Ein Reinigungselement kann zum Beispiel eine Räumleiste sein. Somit werden insbesondere auch Fremdkörper größerer Korngrößen ferngehalten, kleinere die trotz dieser ersten Barriere eingezogen werden, können durch eine im Bewegungsrichtung nachgelagert eingesetzte Bürste abgekehrt werden.

Vorteilhafte Ausführungsbeispiele der Erfindung können eine Räumleiste mit den nachfolgenden Merkmalen beinhalten:
- eine leicht angestellte Kontur, welche bewirkt, dass Fremdkörper an einem sehr niedrigen Kraftangriffspunkt angeregt werden, und/oder
- aufweisend einen flexiblen Werkstoff, um in Ausfahrrichtung bei Fremdkörpern nachgeben zu können und somit einer Verklemmung vorzubeugen und um in Einfahrrichtung bei Fremdkörpern dimensional nachgeben zu können, wodurch auch eine höhere Vorspannung in der Räumleiste aufgebaut wird, was Fremdkörper in Grenzgrößen mit noch höherer Effektivität anregt und entfernt und/oder
- segmentierte Räumelemente, um rotationasymmetrische Fremdkörper besser anregen zu können. Die Räumleiste kann also über ihre Breite in mehreren Segmenten ausgeführt sein, die unabhängig voneinander beweglich sind, was auch bei ungleichmäßig verteilten Fremdkörpern eine optimale Reinigung gewährleistet.

Die Reinigungsvorrichtung erhöht die Verfügbarkeit des Systems in Betriebszuständen mit Verwendung von Streumittel/Splitt wesentlich. Der Wartungsaufwand wird deutlich reduziert. Insbesondere ist eine besonders effektive Entfernung von Fremdkörpern unterschiedlicher Größe durch eine Kombination mindestens einer Räumleiste und mindestens einer Bürste erreichbar. Die Bürste ist in Einschubrichtung des Schiebetritts unmittelbar hinter der Räumleiste angeordnet.

Die Räumleiste besteht vorzugsweise aus einem Federstahl oder auch aus einem witterungsbeständigen, elastischen Kunststoff wie Polyurethan oder einem thermoplastischen Elastomer. Die Bürste weist abriebfeste Kunststoffborsten auf, die sowohl gegen Feuchtigkeit als auch gegen chemische Einflüsse (z.B. Streusalz) beständig sind.

Vorteilhafterweise kann die Reinigungsvorrichtung als nachrüstbare Einheit ausgeführt sein. Beispielsweise kann die Reinigungsvorrichtung eine Trittleiste mit den daran angeordneten Reinigungselementen, vorzugsweise mindestens einer Räumleiste und mindestens einer Bürste aufweisen. Bei bestehenden Fahrzeugen muss dann lediglich die vorhandene Trittleiste gegen die erfindungsgemäße Reinigungsvorrichtung ausgetauscht werden. Die Reinigungsvorrichtung ist vorzugsweise modular aufgebaut und kann dadurch besonders einfach an unterschiedliche Schiebetrittsysteme und Fahrzeugtypen (z.B. Bus, Straßenbahn, U-Bahn) angepasst werden.

Die mindestens eine Bürste kann vorzugsweise in verschiedene Härtegraden aufweisen, um sowohl grobe als auch feine Partikel zu entfernen. Insbesondere können in Bewegungsrichtung des Schiebetritts auch zwei oder mehr Bürstenreihen angeordnet sein, die unterschiedliche Härtegrade oder Höhen aufweisen können.

Vorzugsweise können auch zwei oder mehr Räumleisten vorgesehen sein, die sich ebenfalls in Bewegungsrichtung des Schiebetritts hintereinander befinden. Die Räumleisten können identisch, sie können aber auch hinsichtlich Material, Elastizität, geometrischer Form und Ausrichtung unterschiedlich ausgeführt sein.

In einer weiteren bevorzugten Ausführungsform ist die Räumleiste mit einem integrierten Heizelement versehen. Das Heizelement kann elektrisch betrieben werden und verhindert das Anhaften von Eis und Schnee an der Räumleiste und bewirkt ein kältebedingtes Versteifen der Räumleiste. Die Temperaturregelung kann beispielsweise über einen Thermoschalter oder einen Temperatursensor erfolgen, der das Heizelement nur bei Bedarf aktiviert. Dadurch wird die Funktion der Reinigungsvorrichtungs auch bei extremen Witterungsbedingungen sichergestellt.

Die mindestens eine Bürste kann vorzugsweise an einem federnden Lager befestigt sein, sodass sie sich automatisch an unterschiedliche Höhen der Trittfläche anpasst. Dies gewährleistet eine gleichbleibend effektive Reinigung, auch wenn sich die Trittfläche durch Verschleiß oder Verschmutzung geringfügig verändert.

Zusätzlich zur mechanischen Reinigung durch Räumleiste und Bürste kann das System eine Sprühdüse enthalten, die bei Bedarf Wasser oder Druckluft auf die Trittfläche aufbringt, um festsitzende Verschmutzungen zu lösen. Die Steuerung der Sprühdüse kann manuell oder automatisch erfolgen.

Die Reinigungsvorrichtung kann insbesondere auch bei ausfahrbaren Rampen für Rollstuhlfahrer eingesetzt werden, um die sichere Funktion der Rampe zu gewährleisten. Letztendlich eignet sich die erfindungsgemäße Reinigungsvorrichtung auch für ausfahrbare Plattformen oder Trittflächen industrieller Anlagen, um dort die Verfügbarkeit und Sicherheit zu erhöhen.

Die Erfindung eignet sich besonders gut, wenn Riffelbleche auf der Trittfläche nicht zum Einsatz kommen können. Bei Auswahl von Riffelblech ist der Einsatz von Schaltmatten technisch nicht umsetzbar und in der Konsequenz eine gelagerte Trittstufe mit Trittsensierung mittels Näherungsschalter (Ausschub-Bauweise BISS) erforderlich.

Die erfindungsgemäße Reinigungsvorrichtung kann vorzugsweise im Bereich des freien Endes der Trittleiste, vorzugsweise im Bereich der in Richtung des Schiebetritts ausgerichteten unteren Kante der Trittleiste angeordnet sein. Die Räumleiste kann vorzugsweise in einer Ausnehmung der Trittleiste in diesem Bereich gehalten sein. Diese Ausnehmung erstreckt sich entlang des vorderen freien Endes der Trittleiste, also über die Breite der Trittleiste und des Schiebetritts.

Falls eine zusätzliche Bürste vorgesehen sein sollte, ist diese ebenfalls in diesem Bereich angeordnet, wobei sich die Borsten der Bürste in Richtung Schiebetritt erstrecken. Auch die Bürste kann in einer in der Trittleiste angeordneten Nut gehalten sein, die sich vorzugsweise im Wesentlichen parallel zur Ausnehmung erstreckt. Sie kann aber auch auf andere geeignete Art und Weise an der Trittleiste befestigt sein.

In einer besonders vorteilhaften Ausführungsvariante weist die Räumleiste einen Halteabschnitt auf, über den sie an der Trittleiste befestigt ist. An diesen Halteabschnitt schließt sich ein Räumabschnitt an, der sich in Richtung der Oberfläche des Schiebetritts erstreckt und vorzugsweise aus einem elastischen Material gefertigt ist. Zwischen Haltabschnitt und Räumabschnitt kann als Übergang auch ein Mittelabschnitt vorgesehen sein. Der Halteabschnitt kann auch aus einem weniger elastischen Material gefertigt sein.

Die Räumleiste bzw. deren Räumabschnitt weist eine leicht angestellte Kontur auf, um Fremdkörper möglichst tief angreifen zu können. Dies bedeutet, dass eine freie Kante der Räumleiste in Ausschubrichtung des Schiebetritts leicht nach vorne oben abgekröpft bzw. gebogen ausgeführt ist.

Das Reinigungskonzept basiert unter anderem auch darauf. dass Fremdkörper sich vor den Reinigungselementen verkeilen und durch die sich aufbauenden Federkräften nach außen aus dem Spalt getrieben, sozusagen geschossen werden.

Erst bei einem Kontakt mit einem Fremdkörper wird die Räumleiste in Einschubrichtung des Schiebetritts verschwenkt und erreicht in einer Zwischen- oder Mittelposition eine Ausrichtung, in der die freie Kante der Räumleiste den geringsten Abstand zu einer Oberfläche des Schiebetritts aufweist. Sowohl in ihrer Ausgangsposition als auch in ihrer Endposition ist die freie Kante der Räumleiste weiter von der Oberfläche des Schiebetritts entfernt, als in der genannten Zwischen- oder Mittelposition.

Es hat sich gezeigt, dass die Räumleiste dann besonders wirksam ist, wenn die Ausnehmung eine Bewegung der Räumleiste in der Ausnehmung ermöglicht und sich diese nicht nur im freien Raum unterhalb der Trittleiste bewegen kann.

Vorteilhafterweise ist die Ausnehmung derart angeordnet und ausgeführt ist, dass diese bei einem Kontakt die Räumleiste mit einem Fremdkörper die nach oben in Richtung einer Unterseite der Trittleiste umschlagende bzw. sich nach oben bewegende Räumleiste vollständig oder nahezu vollständig aufnehmen kann. Die freie Kante der Räumleiste steht dann im nach oben umgeschlagenen Zustand nicht oder nur kaum gegenüber einer Unterseite der Trittleiste in Richtung des Schiebetritts vor. Eine ausreichend große Tiefe und Höhe der Ausnehmung, insbesondere die Tiefe in Einschubrichtung des Schiebetritts, ermöglichen einen großen Hub bzw. eine große Schwenkbewegung der Räumleiste und damit einen relativ langen Kontakt mit den Fremdkörpern, wodurch diese wirkungsvoll geräumt werden können.

Vorzugsweise kann die Ausnehmung durch einen Rückversatz der unteren freien Kante des freien Endes der Trittleiste gebildet sein, deren freie vertikale Höhe beispielsweise etwa 30-60 % der Höhe der Trittleiste und deren Tiefe in Einschubrichtung des Schiebetritts ähnlich groß ist, also vorzugsweise ebenfalls etwa 30 - 60 % der Höhe der Trittleiste entspricht.

In einer besonders vorteilhaften Ausführungsvariante weist die Räumleiste einen sich von ihrer freien Kante in Richtung der Trittleiste vertikal erstreckenden Räumabschnitt auf, der in einen bogenförmigen Mittelabschnitt übergeht. Der Mittelabschnitt ist in die dem freien Ende der Trittleiste entgegengesetzte Richtung, also in Richtung eines Fahrzeuginneren gebogen ausgeführt und weist einen quasi horizontalen Bereich auf, der dann aufgrund der weiteren Bogenform in einen sich wieder in Richtung des Schiebetritts erstreckenden etwa vertikal ausgerichteten Halteabschnitt übergeht.

Im bevorzugten Ausführungsbeispiel ist in der Ausnehmung eine vorstehende Halteleiste vorgesehen, die sich in eine Haltenut des Halteabschnitts der Räumleiste hinein erstreckt. Es ist es möglich, die Räumleiste über den Halteabschnitt auf die Halteleiste aufzustecken und somit schnell und einfach in der Ausnehmung zu befestigen. Alternativ sind auch andere Formen möglich, die eine solche Schnapp- oder Aufsteckverbindung ermöglichen. Die Nutzung einer Aufsteckverbindung vereinfacht den Austausch der Räumleiste erheblich. Alternativ sind auch andere reib- und/oder formschlüssige Verbindungen denkbar, die einen einfachen, insbesondere werkzeuglosen Austausch der Räumleiste ermöglichen.

Die Erfindung wird anhand der nachfolgenden Figuren näher erläutert diese soll die Erfindung nicht beschränken, sie sind auch nicht zwangsweise maßstabsgetreu. Die Figuren sollen das Wirkungsprinzip der Reinigungsvorrichtung verdeutlichen.

Vorteilhafterweise ist die Räumleiste derart ausgeführt und angeordnet, dass sie Ausfahren des Schiebetritts durch einen bereits eingezogenen Fremdkörper in Bewegungsrichtung des Schiebetritts nach außen gedrückt werden und sich ohne bleibende Verformung um diesen herum bzw. darüber bewegen kann. Es entsteht also ein Spalt zwischen der freien Kante der Räumleiste und der Oberfläche des Schiebetritts, die eine Rückführung von Fremdkörpern vor die Räumleiste ermöglicht, um diese bei einem erneuten Abweisversuch abführen zu können. Außerdem wird dadurch ein Ansammeln von Fremdkörpern hinter der Räumleiste effektiv verhindert.

### Es zeigen

- Fig. 1:: eine vereinfachte Prinzipdarstellung einer vorteilhaften Ausführungsvariante der Reinigungsvorrichtung im Querschnitt,
- Fig. 2:: eine Darstellung eines Bewegungswegs einer Räumleiste einer Reinigungsvorrichtung gemäß Fig. 1 im Querschnitt.

Die beiden Figuren zeigen eine vorteilhaft erfindungsgemäße Reinigungsvorrichtung 20 im Querschnitt. Die Reinigungsvorrichtung 20 weist als Reinigungselement eine Räumleiste 22 auf, die sich in Richtung eines Schiebetritts 24 erstreckt. Die Räumleiste 22 ist an einer Trittleiste 26 befestigt und derart angeordnet, dass ihr freies Räumleistenende bzw. ihre freie Kante 28 in Richtung des Schiebetritts 24 weist. Die Räumleiste 22 ist im Bereich eines in Ausschubrichtung des Schiebetritts 24 weisenden freien Endes 30 der Trittleiste 26 angeordnet. Die Bewegungsrichtung des Schiebetritts 24 ist durch den Doppelpfeil dargestellt.

Die Trittleiste 26 weist an ihrem vorderen freien Ende 30 eine Ausnehmung 32 auf, in der die Räumleiste 22 befestigt ist. Diese Ausnehmung 32 erstreckt sich entlang des vorderen freien Endes 30 der Trittleiste 26, also im Wesentlichen über die gesamte Breite der Trittleiste 26 und des Schiebtritts 24.

Im gezeigten Ausführungsbeispiel weist die Räumleiste 22 im Querschnitt einen sich von ihrer freien Kante 28 in Richtung der Trittleiste 26 vertikal erstreckenden Räumabschnitt 34 auf, der in einen bogenförmigen Mittelabschnitt 36 übergeht. Der Mittelabschnitt 36 ist in die dem freien Ende 30 der Trittleiste 26 entgegengesetzte Richtung, also in Einschubrichtung des Schiebetritts 24 gebogen und weist einen quasi horizontalen Bereich auf, der dann in einen Halteabschnitt 38 übergeht und sich wieder in Richtung des Schiebetritts 24 erstreckt.

Innerhalb der Ausnehmung 32 ist eine vorstehende Halteleiste 40 angeordnet, die sich in eine Haltenut 42 des Halteabschnitt 38 der Räumleiste 22 hinein erstreckt. Die Räumleiste 22 ist also formschlüssig und/oder reibschlüssig über ihre Haltenut 42 auf die Halteleiste 40 gehalten. Vorzugsweise ist die Räumleiste 22 im Bereich der Haltenut 42 ausreichende elastisch ausgeführt, um die Haltenut 42 auf die Halteleiste 40 aufschieben und von dieser abziehen zu können zu können.

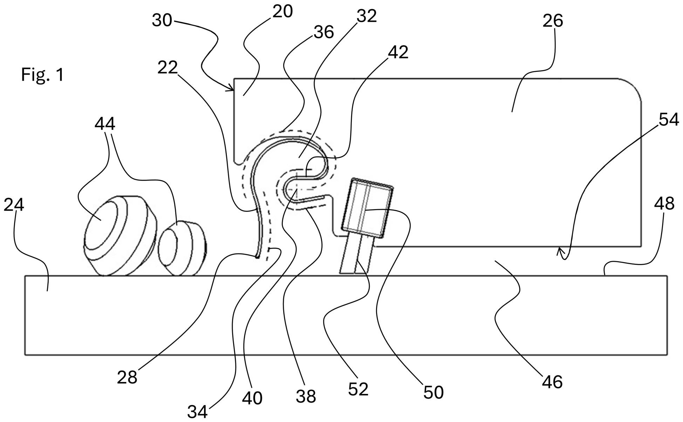

Figur 1 zeigt Fremdkörper 44, die sich auf einer begehbaren Oberfläche 48 des Schiebetritts 24 befinden, aber beim Einfahren des Schiebetritts 24 durch die Räumleiste 22 daran gehindert werden, in einen Spalt 46 zwischen der Trittleiste 26 und dem Schiebetritt 24 einzudringen.

Es hat sich als besonders vorteilhaft erwiesen, wenn in Einschubrichtung des Schiebetritts 24 hinter der Räumleiste 22 zumindest eine Bürste 50 angeordnet ist, deren Borsten 52 sich in Richtung der Oberfläche 48 Schiebetritts 24 erstrecken und diese ebenfalls reinigen. Die Bürste 50 erstreckt sich vorteilhafterweise parallel zur Räumleiste 22 über die gesamte Breite der Räumleiste 22. Die Bürste 50 kann beispielsweise ebenfalls in einer Nut angeordnet sein, die sich etwa parallel zur Ausnehmung 32 über die Breite der Trittleiste 26 bzw. des Schiebetritts 24 erstreckt.

Die Ausnehmung 32 weist im gezeigten Ausführungsbeispiel eine Höhe von etwa 30-60 % einer Höhe der Trittleiste 26 im Bereich ihres freien Endes 30 und eine etwa gleiche Tiefe in Einschubrichtung des Schiebetritts 24 auf.

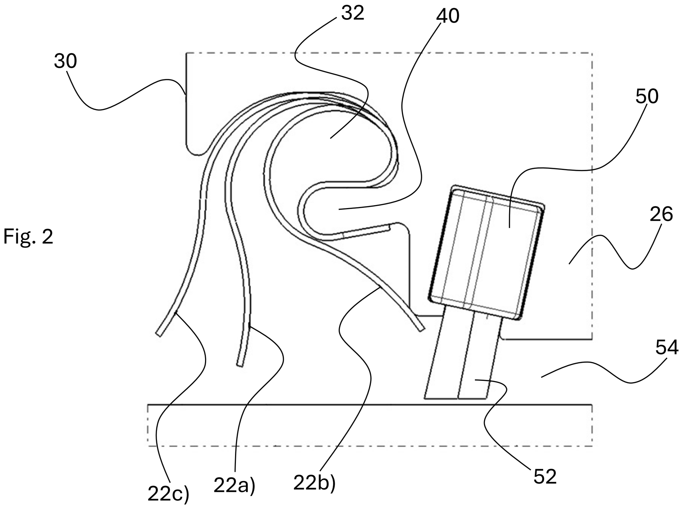

Wie sich insbesondere aus Fig. 2 ergibt, nimmt die Ausnehmung aufgrund der ausreichenden Tiefe der Ausnehmung 32 bei einem Kontakt der Räumleiste 22 mit einem Fremdkörper 44 die nach oben in Richtung der Unterseite 54 der Trittleiste 26 umschlagende bzw. sich nach oben bewegende Räumleiste 22 vollständig auf. Die freie Kante 28 der Räumleiste 22 steht dann im nach oben umgeschlagenen Zustand nicht oder nur kaum gegenüber der Unterseite 54 der Trittleiste 26 in Richtung des Schiebetritts 24 vor. Die Tiefe der Ausnehmung 32 in Einschubrichtung des Schiebetritts 24 übersteigt also vorzugsweise die Länge des Räumabschnitts 34 der Räumleiste 23 bzw. ist die Ausnehmung 32 derart tief, dass die gesamte umgeschlagene Räumleiste 22 darin aufgenommen werden kann.

Figur 2 verdeutlicht den Bewegungsablauf der sich in Einschubrichtung des Schiebetritts umschlagenden Räumleiste 22. Gezeigt sind drei Positionen der Räumleiste 22:
22 a): Die Räumleiste 22 befindet sich in der mittleren und unbelasteten Position.
22 b): Die Räumleiste 22 wird durch einen nicht gezeigten Fremdkörper 44 belastet und federt bis zum Anschlag an der Trittleiste ein.
22 c): Die Räumleiste 22 wird beim Ausfahren des Schiebetritts 24 durch einen bereits eingezogenen Fremdkörper 44 nach außen gedrückt und bewegt sich ohne bleibende Verformung um diesen herum bzw. darüber. Die gezeigte Position 22 c) ermöglicht somit eine Rückführung von Fremdkörpern 44 vor die Räumleiste 22, um diese bei einem erneuten Abweisversuch abzuführen. Außerdem wird ein Ansammeln von Fremdkörpern 44 hinter der Räumleiste 22 dadurch effektiv verhindert.

Die Erfindung ist nicht auf die beschriebenen und gezeigten Ausführungsvarianten beschränkt, sondern umfasst auch weitere technische Umsetzungsmöglichkeiten der Erfindung.

### Bezugsziffernliste

- 20: Reinigungsvorrichtung
- 22: Räumleiste
- 24: Schiebetritt
- 26: Trittleiste
- 28: freie Kante Räumleiste
- 30: freies Ende Trittleiste
- 32: Ausnehmung
- 34: Räumabschnitt
- 36: Mittelabschnitt
- 38: Halteabschnitt
- 40: Halteleiste
- 42: Haltenut
- 44: Fremdkörper
- 46: Spalt
- 48: begehbaren Oberfläche
- 50: Bürste
- 52: Borsten
- 54: Unterseite

## Patentansprüche

1. Reinigungsvorrichtung für ein Trittsystem, aufweisend einen ein- und ausfahrbaren Schiebetritt (24) und ein Reinigungselement für eine Trittfläche, welches derart angeordnet und ausgeführt ist, dass dieses bei Bewegung des Schiebetritts (24) auf der Trittfläche befindliche Fremdkörper (44) entfernt.

2. Reinigungsvorrichtung nach Anspruch 1, **dadurch gekennzeichnet, dass** das Reinigungselement durch eine Räumleiste (22) aus einem flexiblen Material gebildet ist, die im Bereich eines in Ausschubrichtung des Schiebetritts (24) weisenden freien Endes (30) einer Trittleiste (26) befestigt ist und sich in einen Spalt (46) zwischen einer Trittleisten-Unterseite (54) und einer begehbaren Oberfläche (48) des Schiebetritts (24) hinein erstreckt.

3. Reinigungsvorrichtung nach Anspruch 2, **dadurch gekennzeichnet, dass** die Trittleiste (26) an ihrem vorderen freien Ende (30) eine Ausnehmung (32) aufweist, in der die Räumleiste (22) befestigt ist, wobei sich die Ausnehmung (32) entlang des vorderen freien Endes (30) der Trittleiste (26) etwa über die gesamte Breite der Trittleiste (26) und des Schiebtritts (24) erstreckt.

4. Reinigungsvorrichtung nach Anspruch 2 oder Anspruch 3, **dadurch gekennzeichnet, dass** eine freie Kante (28) der Räumleiste (22) in Ausschubrichtung des Schiebetritts (24) nach vorne oben gebogen ausgeführt ist, wodurch die Räumleiste (22) eine in Ausschubrichtung des Schiebtritts (24) angestellte Kontur aufweist, um Fremdkörper (44) an einem niedrigen Kraftangriffspunkt anzuregen und abzuführen.

5. Reinigungsvorrichtung nach einem der Ansprüche 2 bis 4, **dadurch gekennzeichnet, dass** die Räumleiste (22) im Querschnitt einen sich von ihrer freien Kante (28) in Richtung der Trittleiste (26) vertikal erstreckenden Räumabschnitt (34) auf weist, der in einen bogenförmigen Mittelabschnitt (36) übergeht, wobei der Mittelabschnitt (36) in die dem freien Ende (30) der Trittleiste (26) entgegengesetzte Richtung gebogen ausgeführt ist und einen im Wesentlichen horizontal verlaufenden Bereich aufweist, der dann in einen Halteabschnitt (38) übergeht und sich wieder in Richtung des Schiebetritts (24) erstreckt.

6. Reinigungsvorrichtung nach einem der Ansprüche 3 bis 5, **dadurch gekennzeichnet, dass** die Ausnehmung (32) derart angeordnet und ausgeführt ist, dass diese die nach oben in Richtung einer Unterseite (54) der Trittleiste (26) umschlagende Räumleiste (22) nahezu vollständig aufnehmen kann, so dass eine freie Kante (28) der Räumleiste (22) im nach oben umgeschlagenen Zustand nicht oder nur kaum gegenüber der Unterseite (54) der Trittleiste (26) in Richtung des Schiebetritts (24) vorsteht.

7. Reinigungsvorrichtung nach einem der Ansprüche 3 bis 6, **dadurch gekennzeichnet, dass** die Ausnehmung (32) durch einen Rückversatz der unteren freien Kante des freien Endes (30) der Trittleiste (26) gebildet ist, deren freie vertikale Höhe etwa 30-60 % der Höhe der Trittleiste (26) und deren Tiefe in Einschubrichtung des Schiebetritts (24) ebenfalls etwa 30 - 60 % der Höhe der Trittleiste (26) entspricht.

8. Reinigungsvorrichtung nach einem der Ansprüche 1 bis 7, **dadurch gekennzeichnet, dass** die Räumleiste (22) lösbar an der Trittleiste (24) befestigt ist.

9. Reinigungsvorrichtung nach einem der Ansprüche 3 bis 8, **dadurch gekennzeichnet, dass** innerhalb der Ausnehmung (32) eine vorstehende Halteleiste (40) angeordnet ist, die sich in eine Haltenut (42) des Halteabschnitts (38) der Räumleiste (22) hinein erstreckt.

10. Reinigungsvorrichtung nach einem der Ansprüche 2 bis 9, **dadurch gekennzeichnet, dass** die Räumleiste (22) segmentiert ausgebildet ist.

11. Reinigungsvorrichtung nach einem der Ansprüche 2 bis 10, **dadurch gekennzeichnet, dass** in Einschubrichtung des Schiebtritts (24) hinter der Räumleiste (22) eine Bürste (50) angeordnet ist, deren Borsten (52) sich in Richtung der Oberfläche (48) des Schiebetritts (24) erstrecken.

12. Reinigungsvorrichtung nach einem der Ansprüche 2 bis 11, **dadurch gekennzeichnet, dass** sich die Bürste (50) parallel zur Räumleiste (22) über die gesamte Breite der Räumleiste (22) erstreckt.
1. Das abscheiden der Fremdkörper durch die sich beim Einfahren aufbauenden Federkräfte in der Räumleiste 22
2. Die durch die Position 22 c) ermöglichte Rückführung von Fremdkörpern vor die Räumleiste 22 um diese bei einem erneuten Abweisversuch abzuführen und ein Ansammeln von Fremdkörpern hinter der Räumleiste zu verhindern.
